(19)

Europäisches
Patentamt
European
Patent Office
Office européen
des brevets

(11) **EP 2 290 474 A1**

(12) **EUROPEAN PATENT APPLICATION**

(43) Date of publication:
**02.03.2011 Bulletin 2011/09**

(51) Int Cl.:
*G03H 1/16* (2006.01)   *G11B 7/0065* (2006.01)
*G11B 7/095* (2006.01)   *G11B 7/08* (2006.01)

(21) Application number: **09305758.6**

(22) Date of filing: **14.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Thomson Licensing**
**92130 Issy-les-Moulineaux (FR)**

(72) Inventors:
• **Przygodda, Frank**
**78050 Villingen-Schwenningen (DE)**
• **Malki, Oliver**
**78176 Fuetzen (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Tilt compensation for a holographic storage system**

(57)   The present invention relates to a method for tilt compensation in an apparatus (1) for reading from and/or writing to holographic storage media (16), and to an apparatus (1) for reading from and/or writing to holographic storage media (16), which makes use of such a method.

According to the invention, in an apparatus (1) for reading from and/or writing to a holographic storage medium (16) with a reference beam (7) onto which a phase pattern is imprinted, the phase pattern imprinted on the reference beam (7) is laterally shifted for compensating a tilt of the holographic storage medium (16).

**Fig. 4**

**Description**

The present invention relates to a method for tilt compensation in a holographic storage system, and to an apparatus for reading from and/or writing to holographic storage media, which makes use of such a method for optimizing read-out of a recorded hologram.

In holographic data storage digital data are stored by recording the interference pattern produced by the superposition of two coherent laser beams, where one beam, the so-called 'object beam', is modulated by a spatial light modulator and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam.

One advantage of holographic data storage is an increased data capacity. Contrary to conventional optical storage media, the volume of the holographic storage medium is used for storing information, not just a few layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. This allows to achieve increased data rates in addition to the increased storage density. The data page is imprinted onto the object beam by the spatial light modulator (SLM) and detected with a detector array.

Typically the data pages are stored in or near the Fourier plane and thus the frequency components of the data page are stored in different locations of the hologram. Low frequency components are usually located near the center of the Fourier plane, whereas high frequency components are located more distant from the center of the Fourier plane. To avoid a distortion of the frequency spectrum of the data page the intensity distribution of the reference beam in the Fourier plane should be essentially homogeneous. Otherwise, the spectrum of the stored data pages is modulated by the intensity distribution of the reference beam. This distortion degrades the image quality of the retrieved data pages and ultimately leads to an increased bit error rate. Depending on the holographic setup the reference beam can be a plane wave or a focused beam. Setups with a focused reference beam often include a phase mask in order to flatten the intensity distribution of the reference beam and to ensure a good overlap of the object beam and the reference beam inside the holographic storage medium. An example of a holographic storage system with a phase mask is given in EP 2 028 653.

As already stated above the read-out of a recorded hologram is performed by illuminating the hologram with the reference beam under identical conditions as during recoding. A misalignment of the reference beam leads to a weak reconstructed hologram or even inhibits the read-out of the hologram. The consequence is loss of data. To avoid this it has to be ensured that the wavefront of the reference beam has the same alignment relative to the holographic storage medium in terms of position and tilt as during recording. In holographic storage systems with exchangeable holographic storage media this is typically not the case. As a consequence, an actuator system is required. The actuator system adjusts the reference beam with respect to the hologram. Usually the objective lens for focusing the reference beam into the holographic storage system is mounted on an actuator system, which allows for positioning in two dimensions for focus and tracking control and tilting in one axis. Advanced actuators sometimes have even more degrees of freedom, e.g. to enable tilt adjustment in two axes. Such actuator systems are, however, complex and expensive.

It is an object of the present invention to propose a simplified solution for tilt compensation in an apparatus for reading from and/or writing to holographic storage media.

According to the invention, this object is achieved by a method for tilt compensation in an apparatus for reading from and/or writing to a holographic storage medium with a reference beam onto which a phase pattern is imprinted, which has the step of laterally shifting the phase pattern imprinted on the reference beam for compensating a tilt of the holographic storage medium.

Similarly, an apparatus for reading from and/or writing to a holographic storage medium, with a reference beam onto which a phase pattern is imprinted, is adapted to laterally shift the phase pattern imprinted on the reference beam to compensate for a tilt of the holographic storage medium.

According to the invention the tilt is compensated in both axes by shifting a phase pattern imprinted of the reference beam in lateral direction, i.e. perpendicular to the optical axis, instead of tilting the objective lens used for focusing the reference beam into the holographic storage medium. The two-dimensional movement of the phase pattern imprinted on the reference beam allows to compensate a tilt of the holographic storage medium in both dimensions, radial and tangential. This is not possible with a standard 3D objective lens actuator, which can be tilted only in one dimension (3D-actuator: focus, tracking, 1D-tilt). In addition, as the actuator for the objective lens does no longer require any means for tilt compensation, the actuator can be kept simple and inexpensive compared to known 4D-actuators, which are able to compensate tilt in both axes. Advantageously, the tilt of the holographic storage medium is compensated both during reading and recording of a hologram.

Advantageously, the tilt of the holographic storage medium is determined by a tilt detector. Preferably, the tilt detector determines the tilt of the holographic storage medium by translating the phase pattern in two dimensions and analyzing the strength of a reconstructed object beam. This solution has the advantage that no additional tilt detection system is needed, as the tilt is determined from the retrieved holograms. It is, of course, likewise possible to determine the tilt by a separate tilt detection system. Advantageously, the tilt detection system analyzes a reflection angle of a light beam reflected by the holographic storage medium for tilt determination. Once the tilt has been determined, the necessary shift of the phase pattern is calculated or retrieved from a look-up table. As an example, at a wavelength of 405nm and a numerical aperture of 0.6 a shift of the phase pattern of about $40\mu m$ is necessary to compensate a tilt of 1 degree.

Favorably, the phase pattern is laterally shifted by moving a phase mask or a spatial light modulator for imprinting the phase pattern on the reference beam. Moving of the phase mask or the spatial light modulator is performed, for example, by an actuator including one of a Piezo- or motor-driven translation stage and a voice coil actuator. By moving the phase mask or the spatial light modulator the tilt compensation scheme according to the invention is implemented in a simple and efficient manner.

Alternatively, the phase pattern is laterally shifted by shifting a phase pattern on a spatial light modulator for imprinting the phase pattern on the reference beam. This solution has the advantage that no movable parts are necessary for tilt compensation. It is especially useful for a coaxial holographic storage system, where a single spatial light modulator is used for generating both the object beam and the reference beam.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:

Fig. 1    illustrates a counter-propagating holographic storage system according to the invention,

Fig. 2    shows illumination of a hologram volume with a focused reference beam in case of a holographic storage medium without tilt,

Fig. 3    depicts illumination of a hologram volume with a focused reference beam in case of a holographic storage medium with tilt,

Fig. 4    illustrates the situation of Fig. 3 with tilt compensation,

Fig. 5    depicts a centered phase pattern with respect to a pupil defined by an objective lens,

Fig. 6    shows a shifted phase pattern with respect to the pupil defined by the objective lens,

Fig. 7    depicts a centered phase pattern on a spatial light modulator,

Fig. 8    shows a shifted phase pattern on the spatial light modulator, and

Fig. 9    illustrates a coaxial holographic storage system according to the invention.

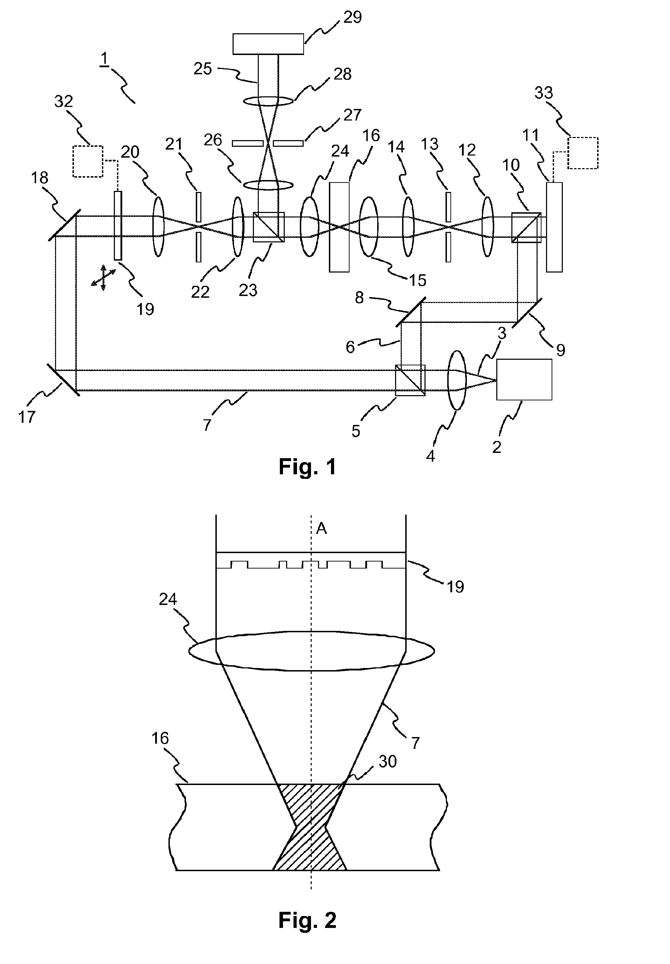

Fig. 1 illustrates a counter-propagating holographic storage system 1 according to the invention. A light source 2 emits a light beam 3, which is collimated by a collimating lens 4 and split by a first beam splitter 5 into an object beam 6 and a reference beam 7. For writing, the object beam 6 is directed via two mirrors 8, 9 and a second beam splitter 10 onto a reflective spatial light modulator 11, which imprints a data page, i.e. a data pattern, onto the object beam 6. The reflected object beam 6 passes through the second beam splitter 11 and a first spatial filter consisting of two lenses 12, 14 and a filter aperture 13 and is focused by a first objective lens 15 into a holographic storage layer of a holographic storage medium 16. The reference beam 7 is directed towards the holographic storage medium 16 by two mirrors 17, 18. Before being focused into the holographic storage layer of the holographic storage medium 16 by a second objective lens 24, the reference beam 7 passes through an adjustable phase mask 19 and a second spatial filter consisting of two lenses 20, 22 and a filter aperture 21. Due to the interference between the object beam 6 and the reference beam 7 a hologram is recorded in the holographic storage layer of the holographic storage medium 16.

For reading a hologram located in the holographic storage layer of the holographic storage medium 16, the hologram is illuminated with the reference beam 7 only. The resulting reconstructed object beam 25 is collimated by the second objective lens 24 and directed onto an array detector 29, e.g. a CCD camera, by a third beam splitter 23. Before it impinges on the array detector 29, the reconstructed object beam 25 passes through a third spatial filter consisting of two lenses 26, 28 and a filter aperture 27. By adjusting the position of the adjustable phase mask 19, e.g. with a movable mount (32) such as a Piezo or motor-driven x-y-translation stage or a voice coil actuator, a tilt of the holographic storage medium 16 is compensated.

In the following the tilt compensation shall be explained in more detail. A focusing optic (lens or lens system) has two fundamental planes, the focal plane and the image plane. They are located at a focal length $f_l$ before and behind the lens or rather the principal planes of the lens system. In the above described holographic storage system 1 with a focused reference beam 7 the holographic storage medium 16 is located in or near the focal plane. The phase mask 19 is located in or near the image plane. There exists an important relation between the wavefronts at these two planes, which is called the Fourier shift theorem. If $f(x)$ has the Fourier transform $F(k)$, than $f(x-x_0)$ has the Fourier transform:

$$\int_{-\infty}^{\infty} f\left(x-x_0\right) e^{-2\pi i k x} dx \quad = \quad \int_{-\infty}^{\infty} f\left(x-x_0\right) e^{-2\pi i k\left(x-x_0\right)} e^{-2\pi i k x_0} d\left(x-x_0\right)$$

$$= \quad e^{-2\pi i k x_0} F\left(k\right).$$

This means that a shift in one domain leads to a linear phase change in the other domain. A linear phase change, however, describes a tilted wavefront. Therefore, a tilted wavefront in the focal plane is created by shifting the wavefront in the image plane. With other words, the movement of the phase mask 19 in the image plane causes a tilt of the wavefront in the holographic material. This allows to adjust the wavefront with respect to a tilted holographic storage medium 16, as depicted in Figs. 2 to 4.

Fig. 2 depicts the hologram volume 30 inside the holographic storage medium 16, which is illuminated by the focused reference beam 7 after passing the phase mask 19. In this figure the holographic storage medium 16 is not tilted, i.e. the optical axis A is perpendicular to the surface of the holographic storage medium 16. Usually the diameter of the phase mask is larger than the diameter of the reference beam 7. However, in Fig. 2 only limited parts of the reference beam 7 and the phase mask 19 are shown.

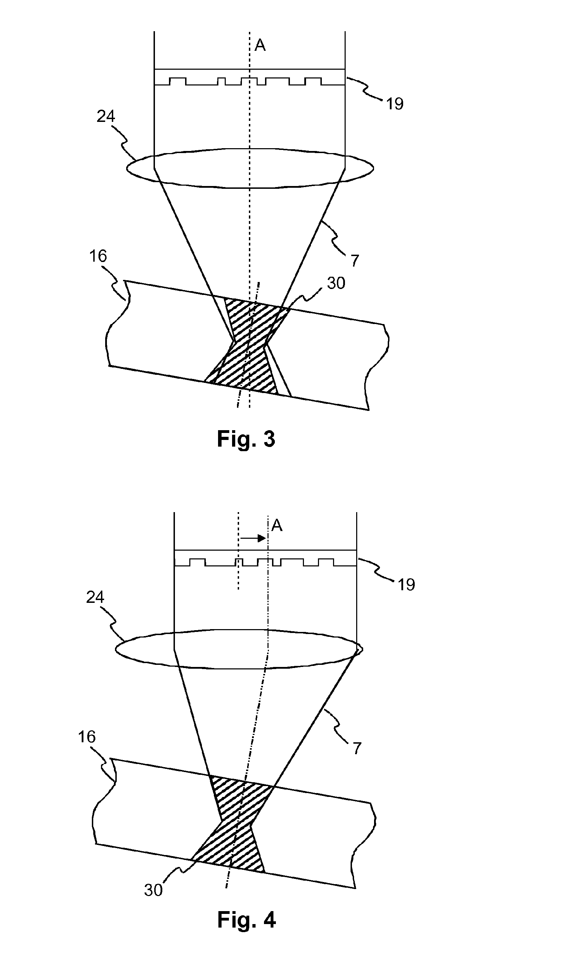

The situation in case of a tilt of the holographic storage medium 16 is illustrated in an exaggerated manner in Fig. 3. As can be seen, the optical axis A is no longer perpendicular to the surface of the holographic storage medium 16. As a consequence, the reference wavefront does not fit to the recorded hologram and in addition some parts of the hologram volume 30 inside the holographic storage medium 16 are not illuminated by the focused reference beam 7. This leads to a weaker reconstructed hologram and, consequently, to an increased error rate.

The tilt of the holographic storage medium 16 is compensated by shifting the phase mask 19 relative to the pupil of the second objective lens 24. This is schematically illustrated in Fig. 4. As can be seen, the optical axis A is again perpendicular to the surface of the holographic storage medium 16, the reference wavefront fits to the recorded hologram and the whole hologram volume 30 inside the holographic storage medium 16 is illuminated by the focused reference beam 7. The limited part of the phase mask 19 of Fig. 2 is shifted into a different part of the reference beam 7. As only that part of the reference beam 7 passing through the limited part of the phase mask 19 is depicted in Fig. 4, this leads to the impression that the reference beam 7 is shifted relative to the second objective lens 24. This is, however, not the case, the position of the whole reference beam 7 does not change.

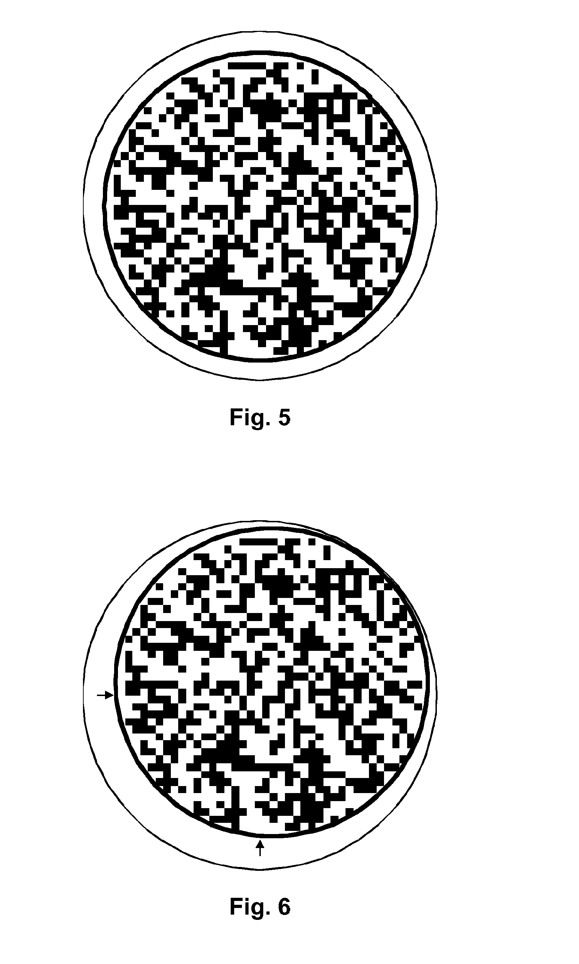

Figs. 5 and 6 show a centered and a shifted phase pattern with respect to the pupil, which is defined by size of the second objective lens 24. The ring shaped area between the phase cells and the pupil is shown empty for clarity. In an actual optical setup the phase pattern usually fills the whole pupil. It is, however, likewise possible to combine the phase mask 19 with a blocking aperture. In this case the reference beam 7 is blocked by the ring shaped area between the phase cells and the pupil, i.e. contrary to the explanations given above regarding Fig. 4 the reference beam 7 is actually shifted with regard to the second objective lens 24.

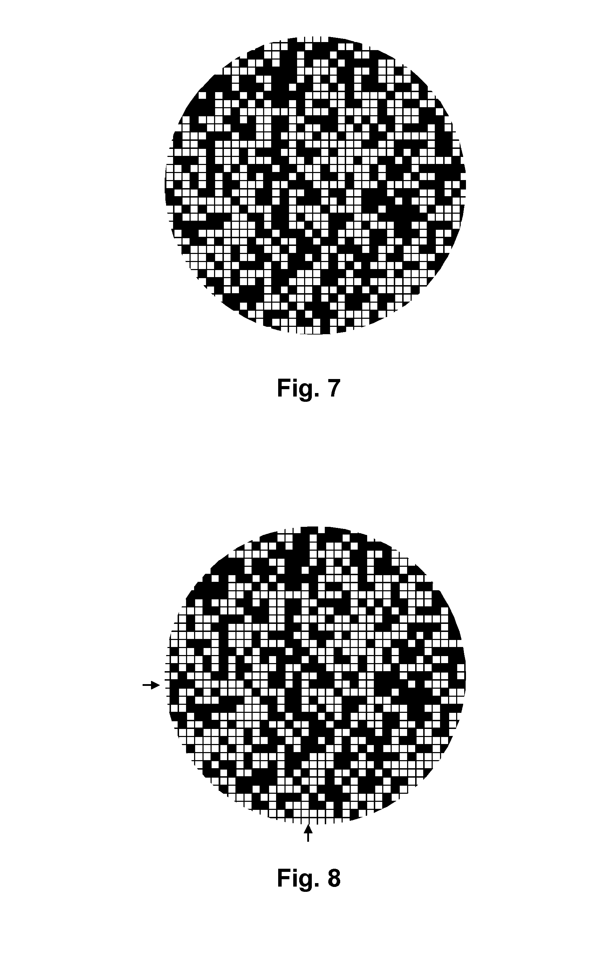

Instead of a movable phase mask 19 an optical element with switchable phase cells can likewise be used, e.g. an optical element similar to a spatial light modulator. This optical element is fixed, but the phase cells are switched in such a way that the whole phase pattern is translated laterally. In this case a phase pattern controller 33 controls the switching of the phase cells. This is schematically depicted in Figs. 7 and 8, where the phase pattern of Fig. 8 is slightly moved to the right and to the top compared to the phase pattern of Fig. 7.

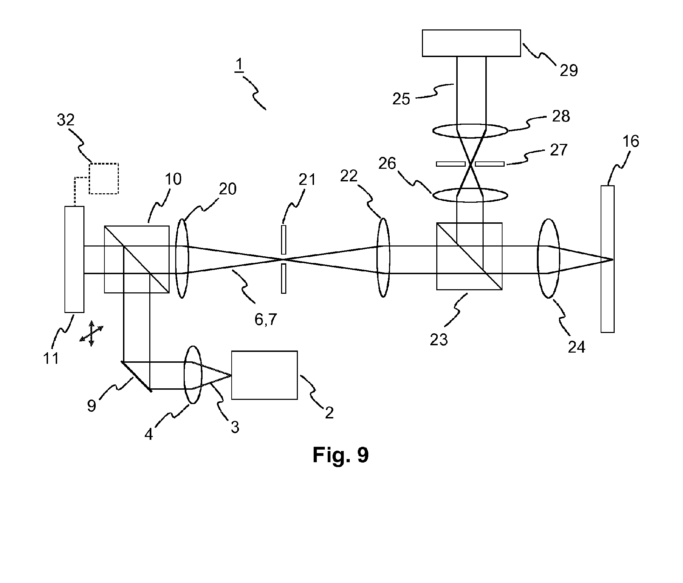

The solution according to the invention is likewise applicable to a coaxial holographic storage system 1, where the reference beam 7 surrounds the object beam 6. Details on coaxial holographic storage systems can be found, for example, in K. Tanaka et al.: "Improved performance in coaxial holographic data recording", Opt. Exp. Vol. 15 (2007), pp. 16196-16209. Such a system 1 is illustrated in Fig. 9. In a coaxial holographic storage system 1 the reference beam 7 is generated by the spatial light modulator 11. The translation of the reference pattern is achieved by either moving the whole spatial light modulator 11 or by switching the pixels of the spatial light modulator 11 in such a way that the reference pattern is translated.

The detection of the actual medium tilt is advantageously performed by analyzing the strength of the reconstructed object beam 25 during a periodical movement of the phase mask 19 (or a corresponding translation of the phase pattern) in two dimensions. At signal maximum the tilt is compensated correctly. This method requires a number of readings for each hologram. Another, less time consuming solution is to perform the movement of the phase mask or the translation of the phase pattern during the continuing read-out of holograms along a track of the holographic storage medium 16. This approach is preferable if the tilt of the holographic storage medium 16 does not change much from one hologram to the next. A third possibility is to detect the tilt of the holographic storage medium 16 by an independent system, e.g. by detection of a reflection angle of a light beam. In case of a holographic storage medium 16 with an additional layer similar to conventional pit-based optical recording media, tilt detection systems applicable to pit-based optical recording media can likewise be used. In the latter cases the necessary shift of the phase pattern is preferably retrieved from a look-up table.

**Claims**

1.  Method for tilt compensation in an apparatus (1) for reading from and/or writing to a holographic storage medium (16) with a reference beam (7) onto which a phase pattern is imprinted, **having** the step of laterally shifting the phase pattern imprinted on the reference beam (7) for compensating a tilt of the holographic storage medium (16).

2.  Method according to claim 1, **further** having the step of determining the tilt of the holographic storage medium (16).

3.  Method according to claim 2, **wherein** the tilt of the holographic storage medium (16) is determined by translating the phase pattern in two dimensions and analyzing the strength of a reconstructed object beam (25).

4.  Method according to one of claims 1 to 3, **wherein** the phase pattern is laterally shifted by moving a phase mask (19) or a spatial light modulator (11) for imprinting the phase pattern on the reference beam (7).

5.  Method according to one of claims 1 to 3, **wherein** the phase pattern is laterally shifted by shifting a phase pattern on a spatial light modulator (11) for imprinting the phase pattern on the reference beam (7).

6.  Apparatus (1) for reading from and/or writing to a holographic storage medium (16), with a reference beam (7) onto which a phase pattern is imprinted, **characterized in that** the apparatus (1) is adapted to laterally shift the phase pattern imprinted on the reference beam (7) to compensate for a tilt of the holographic storage medium.

7.  Apparatus (1) according to claim 6, **further** having a tilt detector for determining the tilt of the holographic storage medium (16).

8.  Apparatus (1) according to claim 7, **wherein** the tilt detector determines the tilt of the holographic storage medium (16) by translating the phase pattern in two dimensions and analyzing the strength of a reconstructed object beam (25).

9.  Apparatus (1) according to one of claims 6 to 8, **having** an actuator (32) for laterally moving a phase mask (19) or a spatial light modulator (11) for imprinting the phase pattern on the reference beam (7).

10. Apparatus (1) according to claim 9, **wherein** the actuator (32) includes one of a Piezo- or motor-driven translation stage and a voice coil actuator.

11. Apparatus (1) according to one of claims 6 to 8, **having** a phase pattern controller (33) for laterally shifting a phase pattern on a spatial light modulator (11) for imprinting the phase pattern on the reference beam (7).

**Fig. 1**

**Fig. 2**

**Fig. 3**

**Fig. 4**

**Fig. 5**

**Fig. 6**

**Fig. 7**

**Fig. 8**

**Fig. 9**

Europäisches
Patentamt

European
Patent Office

Office européen
des brevets

**EUROPEAN SEARCH REPORT**

Application Number

EP 09 30 5758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/030875 A1 (HORIMAI HIDEYOSHI [JP]) 10 February 2005 (2005-02-10) | 1,6 | INV. G03H1/16 |
| A | * paragraph [0073] - paragraph [0081]; figure 6 * | 2-5,7-11 | G11B7/0065 G11B7/095 G11B7/08 |
| A | US 7 116 626 B1 (WOODS DANIEL D [US] ET AL) 3 October 2006 (2006-10-03) * the whole document * | 1-11 | |
| A | JP 2005 122878 A (MATSUSHITA ELECTRIC IND CO LTD) 12 May 2005 (2005-05-12) * the whole document * | 1-11 | |
| Y,D | EP 2 028 653 A1 (THOMSON OHG DEUTSCHE [DE]) 25 February 2009 (2009-02-25) | 1,6 | |
| A | * paragraph [0005] - paragraph [0036]; figures 1-16 * | 2-5,7-11 | |

TECHNICAL FIELDS
SEARCHED      (IPC)

G03H
G11B

The present search report has been drawn up for all claims

| Place of search | Date of completion of the search | Examiner |
|---|---|---|
| Munich | 20 November 2009 | Baur, Christoph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 30 5758

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2009

| Patent document cited in search report | | | Publication date | Patent family member(s) | | | Publication date |
|---|---|---|---|---|---|---|---|
| US 2005030875 | A1 | | 10-02-2005 | JP | 4258625 | B2 | 30-04-2009 |
| | | | | JP | 2005032309 | A | 03-02-2005 |
| US 7116626 | B1 | | 03-10-2006 | NONE | | | |
| JP 2005122878 | A | | 12-05-2005 | NONE | | | |
| EP 2028653 | A1 | | 25-02-2009 | CN | 101373371 | A | 25-02-2009 |
| | | | | EP | 2028655 | A1 | 25-02-2009 |
| | | | | JP | 2009048761 | A | 05-03-2009 |
| | | | | KR | 20090019687 | A | 25-02-2009 |
| | | | | US | 2009051990 | A1 | 26-02-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2028653 A

**Non-patent literature cited in the description**

- **K. Tanaka et al.** Improved performance in coaxial holographic data recording. *Opt. Exp.,* 2007, vol. 15, 16196-16209